# EUROPEAN PATENT SPECIFICATION

(11) **EP 2 385 482 B1**
(45) Date of publication and mention of the grant of the patent: **20.04.2016**
(21) Application number: 10004750.5
(22) Date of filing: 05.05.2010
(51) Int. Cl.: G06K 9/00

(54) **A driver assisting system and method for a motor vehicle**
Fahrerassistenzsystem und -verfahren für ein Kraftfahrzeug
Système d'assistance au conducteur et procédé pour véhicule à moteur

(43) Date of publication of application: 09.11.2011
(73) Proprietor: Autoliv Development AB, 447 83 Vårgårda (SE)
(72) Inventor: Tjärnström, Fredrik, 58245 Linköping (DE)
(74) Representative: Müller Verweyen

(56) References cited:
- EP-A1- 1 839 964
- EP-A2- 1 569 160
- US-A1- 2007 203 617
- US-A1- 2008 069 400
- US-A1- 2008 170 754

## Description

The invention relates to a driver assisting system for a motor vehicle, comprising an imaging means adapted to record images of a region surrounding the motor vehicle, an object detection means for detecting objects in the recorded images by image processing, an object processing means for applying further processing to detected objects, and a driver assisting means controlled depending on the result of said object detection and object processing. The invention furthermore relates to a corresponding driver assisting method.

Such systems are generally known, for example from US 7 263 209 B2. Since the object detection performance of such systems depends on different external conditions, the reliability of the driver assisting system may vary strongly. For a thermal imaging system, for example, the object detection performance decreases when the temperature of the scene gets close to 37 °C because of low thermal contrast, or when it is raining or very humid outside because of lower transmission and more homogenous temperature distribution of objects to be detected. Generally, in the case of unfavourable external conditions the reliability of the driver assisting system may become low, possibly causing misleading of the driver and/or suboptimal control of the driver assisting means. Since, furthermore, the driver does not know the current object detection performance of the system, and may have difficulties to estimate it, problems may arise in situations where the driver reliance on the driver assistant system is not in conformity with its current object detection performance. This is particularly problematic when the driver relies on the driver assistant system under conditions where the current object detection performance is low.

US 2008 170754 A1 discloses a driver assisting system comprising a camera, a radar sensor and an image processing unit. The image processing unit comprises an obstacle detection means, a reference image extraction means, a masking means and a reliability calculation means. The obstacle detection means is adapted to detect objects like preceding vehicles and high-luminance objects on the basis of information from the radar sensor. The reference image extraction means is adapted to extract a reference image within the images recorded by the camera. If an obstacle has been detected by the obstacle detection means, a mask region is defined enclosing the detected obstacles. The reference image is then masked by excluding the mask region from the reference image, leading to a masked reference image. The reliability calculation means is adapted to calculate the reliability of the determination of the presence of fog based on the masked reference image.

EP 1 839 964 A1 discloses a pedestrian detecting device for a vehicle comprising a far-infrared camera, a processing means and an environment detecting device. The environment detecting device is adapted to detect the outside environment (night or daytime, season, outside temperature, sunshine luminosity) on the basis of data from various sensors like temperature sensor and luminosity sensor. A specified predetermined pedestrian model that is associated with the detected outside environment is extracted from a memory by the processing means.

US 2008 0069400 A1 discloses a vision-based vehicle detection system adapted to determinate different lighting conditions (daylight, low light, night, saturation) from image processing.

US 2007/0203617 A1 discloses a driver assistance system providing driver assistance functions like lane departure warning LDW and lane keeping support LKS, wherein activation and deactivation of the driver assistance functions are a function of a confidence level.

The object of the invention is to provide a driver assisting system and method avoiding the above mentioned problems.

The invention solves this object with the features of the independent claims. The estimation of the current detection performance of the object detection means by the detection performance estimating means allows further action to be taken by the driver assisting system depending on the estimated detection performance, in order to avoid misleading of the driver or suboptimal control of the driver assisting means.

The estimation of the current detection performance on the basis of a result provided by the object processing means according to the invention is advantageous over an estimation based on image quality, i.e. signal-to-noise ratio in the detected images, as a measure of the object detection performance. First of all, the image quality may be difficult to estimate reliably. Moreover, by using the image quality as a measure of the object detection performance it is not possible to detect a decreased object detection performance resulting from a property of an object itself. For example in the pedestrian detection by a thermal imaging means, it is much more difficult to detect a pedestrian with a lot of clothes on since he becomes thermally insulated, leading to a decreased thermal contrast against the background and a correspondingly decreased object detection probability.

Preferably the object detection performance is estimated using a result from a tracking means in the object processing means, because the tracking information very distinctly depends on the object detection reliability. A particularly useful quantity for estimating the object detection performance is the frequency of missed detections in a track of a detected object over time, i.e. the number of missed detections related to a suited reference quantity, for example per unit length or divided by the number of frames. There is a distinct and unambiguous relationship between the frequency of missed detections and the object detection performance. In particular, the frequency of missed detections increases with decreasing object detection performance.

Another useful quantity for estimating the object detection performance is the distance at which an object is detected first, because an object can be detected more early, or already at a larger distance, if the object detection performance is good. Any other quantity which is directly related to the distance of detection may be equally suited. For example, the height of an object in the image when this object is detected first may be used as a measure for the detection distance, because objects which are detected early, i.e. at a large distance, have a small height when being first detected in a track. Another such quantity is the overall track length of a detected object.

The invention is not limited to using results from a tracking means for estimating the object detection performance. In combination or alternatively, the detection performance may for example be estimated using a result from a classification means in said object processing means. In particular, a classification confidence measure provided by a classification means may be related to the object detection reliability and, therefore, be suitable as a measure for the object detection performance.

In general, the term object processing means comprises any functional unit which applies specific processing not to the whole image, or parts of the image not related to a detected object, but to a restricted image area corresponding to detected objects, in particular detected objects to be displayed to the driver. Object processing comprises object tracking, object verification and/or object classification without being limited thereon.

In order to obtain a reliable result, the detection performance preferably is estimated using a combination of results for a plurality of objects, not just for a single object that may be for example difficult to detect and therefore gives a wrong result which is not representative.

A preferred course of action to be taken by the driver assisting system depending on the estimated detection performance is to make an indication to the driver via the driver assisting means if the estimated detection performance fulfils a predetermined condition. In particular, a low confidence indication may preferably be made to the driver if the estimated detection performance significantly falls below a predetermined normal detection performance. Such information may be very valuable for the driver, telling him that the drivers' vigilance should be increased and/or that the driver assisting system should be ignored or in any case not exclusively relied upon. The indication may be optical, acoustical and/or haptical in any suited manner. In a preferred embodiment, an indication is made on a display device used for displaying information relating to detected objects. For example, the image displayed on the display device may be displayed in a different colour if the estimated detection performance significantly falls below a predetermined normal detection performance.

The action to be taken by the driver assisting system depending on the estimated detection performance is not limited to making an indication to the driver. For example, the driver assisting means may be temporarily turned off if the estimated detection performance significantly falls below a predetermined normal detection performance. In that case, the driver assisting means may advantageously be turned on again if the estimated detection performance raises again above a predetermined detection performance.

In the following the invention shall be illustrated on the basis of preferred embodiments with reference to the accompanying drawings, wherein:
- Fig. 1: shows a schematic illustration of a vehicle mounted driver assisting system; and
- Fig. 2: shows a schematic illustration of a track of object detections under normal object detection performance; and
- Fig. 3: shows a schematic illustration of a track of object detections under reduced object detection performance.

The driver assisting system 10 is mounted in a motor vehicle and comprises an imaging means 11 for recording images of a region surrounding the motor vehicle, for example a region in front of the motor vehicle. Preferably the imaging means 11 comprises one or more optical imaging devices 12, in particular infrared cameras, where infrared covers near IR with wavelengths below 5 microns and/or far IR with wavelengths beyond 5 microns. Cameras in the visual range are also possible. Another possibility is combination of IR cameras and cameras in the visible range. Preferably the imaging means 11 comprises a plurality imaging devices 12 in particular forming a stereo imaging means 11; alternatively only one imaging device forming a mono imaging means can be used.

The imaging means 11 is preferably coupled to an image pre-processor 13 adapted to control the capture of images by the imaging means 11, receive the electrical signal containing the image information from the imaging means 11, warp pairs of left/ right images into alignment and/or create disparity images, which per se is known in the art. The image pre-processor 13 may be realized by a dedicated hardware circuit. Alternatively the pre-processor 13, or part of its functions, can be realized in an electronic processing means 14.

The pre-processed image data is then provided to the electronic processing means 14 where further image and data processing is carried out by corresponding software. Expediently, the electronic processing means 14 has access to an electronic memory means 25. In particular, the image and data processing in the processing means 14 comprises an object detection means 15 for detecting objects in the surrounding of the motor vehicle, an object classification means 16 for classifying the detected objects into at least one object category, such as pedestrians, other vehicles, bicyclists or large animals, and an object tracking means 17 for tracking over time the position of detected object candidates in the recorded images. Depending on the result of the object detection, classification and tracking processing, driver assisting means 18 are activated or controlled by the processing means 14. The driver assisting means 18 may in particular comprise a display means 19 for displaying information relating to an identified object and/or to provide an optical collision warning to the driver. The driver assisting means 18 may further comprise a warning means adapted to provide a collision warning to the driver by suitable optical, acoustical and/or haptical warning signals; one or more safety systems, in particular restraint systems such as occupant airbags or safety belt tensioners, pedestrian airbags, hood lifters and the like; and/or dynamic vehicle control systems such as brakes.

The electronic processing means 14 is preferably programmed or programmable and may comprise a microprocessor or microcontroller, such as DSP, FPGA, ASICS, etc. The image pre-processor 13, the electronic processing means 14 and the memory means 25 are preferably realized in an on-board electronic control unit (ECU) and may be connected to the imaging means 11 via a separate cable or alternatively via a vehicle data bus. In another embodiment the ECU and an imaging device 12 can be integrated into a single unit. All steps from imaging, image pre-processing, image processing to activation or control of driver assisting means 18 are performed automatically and continuously during driving in real time.

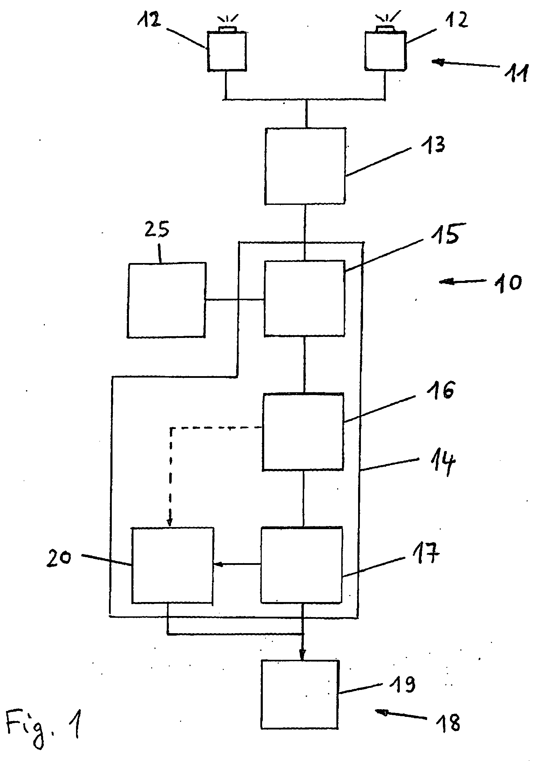

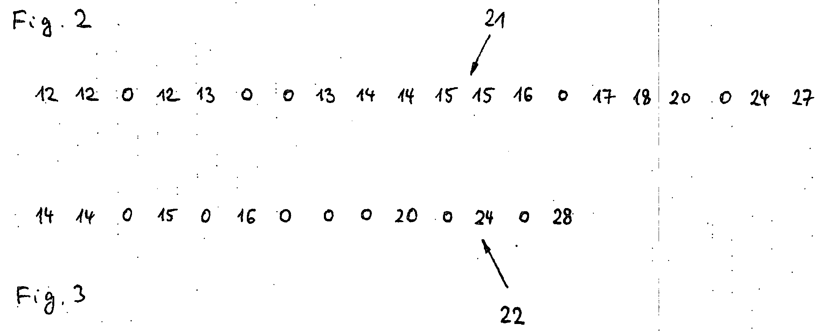

The electronic processing means 14 furthermore comprises a detection performance estimating means 20 adapted to provide an estimation of the detection performance of the object detection means 15 using a result from the object processing means 16, 17. This will be explained on the basis of Figs. 2 and 3. In the preferred embodiment underlying Figs. 2 and 3, the detection performance estimating means 20 estimates the detection performance of the object detection means 15 using a result from the object tracking means 17, only. However, the detection performance estimating means 20 may additionally or alternatively also use a result from the object classification means 16 for estimating the detection performance of the object detection means 15. This is indicated in Fig. 1 by a dashed arrow.

Fig. 2 shows a track 21 of one particular object detected by the object detection means 15 under normal object detection performance over a consecutive series of for example twenty images, where every image corresponds to a defined time frame. This track 21 is provided by the tracking means 17 which is adapted to detect relations between detected objects in consecutive images, showing that they belong to one and the same object in the surrounding of the motor vehicle.

The number given in Fig. 2 for every frame or image indicates the height of the particular object in the corresponding image. For example, when the object of the track 21 was detected first it had a height of twelve in arbitrary units, as indicated by the leftmost number of track 21. In the next image the same object had still a height of twelve. In the third image the object could not be detected. In the fourth image the object had still a height of twelve, while in the fifth image the object had a height of thirteen because the vehicle approached the object. In the last image, before the object dropped out of view, the object had a height of twenty-seven as indicated by the rightmost number of track 21.

The track 21 contains altogether five missed detections (each indicated by a zero). This shows that, for example, a frequency of about 20% of missed object detections in an object track may be expected under normal conditions.

Fig. 3 shows an object track 22 recorded under less favourable external conditions which lead to a reduced performance of the object detection means 15. The reduced object detection performance has several consequences. First of all, the object is detected later, at a shorter distance to the vehicle. Therefore, the object has a larger height when it is detected first (for example height fourteen in Fig. 3), and the overall track length from the first detection until dropping out of view is shorter (for example fourteen frames in Fig. 3). Furthermore, the number of missed detections significantly increases to for example seven in Fig. 3 or 50% relative to the number of frames.

The detection performance estimating means 20 determines from the track length, the object height at first detection, the number or frequency of missed detections, a combination of such factors, and/or any other suitable quantity, that the object detection performance of the object detection means 15 is significantly reduced in the example of Fig. 3. For example, the detection performance estimating means 20 may determine a reduced object detection performance if the number of missed detections in relation to the number of frames exceeds 30%.

Preferably the detection performance estimating means 20 does not rely on a single track 22, but uses a suited combination of results for a plurality of detected objects or tracks, preferably at least five tracks, more preferably in the range of eight to twenty tracks. For example, the frequency of missed detections averaged over several tracks may be considered. Alternatively, a reduced object detection performance may be assumed if a reduced object detection performance is detected for a pre-defined number of tracks, or for a pre-defined percentage of a predetermined number of tracks. In view of the above, the detection performance estimating means 20 is expediently adapted to store results for a plurality of objects or tracks in the memory means 25.

In case the detection performance estimating means 20 determines a reduced object detection performance of the object detections means 15, it expediently causes suitable action in order to reduce or avoid negative consequences. In particular, the detection performance estimating means 20 may control the display means 19 to indicate to the driver a reduced performance of the driver assisting system 10. This may for example be done by changing the colour of the display 19.

## Claims

1. A driver assisting system (10) for a motor vehicle, comprising an infrared and/or visible range imaging means (11) adapted to record images of a region surrounding the motor vehicle, an object detection means (15) adapted to detect objects in the recorded images by processing images from said infrared and/or visible range imaging means (11), an object processing means (16, 17) for applying further processing to objects detected in the recorded images by said object detection means (15), wherein said further processing comprises object tracking in a tracking means (17), and a driver assisting means (18), comprising at least one of a display means (19), a warning means, a safety system and/or a dynamic vehicle control system and being controlled depending on the result of said object detection and object processing, wherein controlling said driver assisting means (18) comprises displaying information relating to an identified object, providing a collision warning to the driver and/or activating or controlling said safety system and/or said dynamic vehicle control system, **characterized in that** said driver assisting system (10) further comprises a detection performance estimating means (20) adapted to provide an estimation of the detection performance of said object detection means (15) using a result from said object processing means (16, 17), wherein said detection performance is estimated using a result from said tracking means (17), wherein an indication is made to the driver via said driver assisting means (18), and/or the driver assisting means (18) is temporarily turned off, if the detection performance fulfils a predetermined condition, and wherein said detection performance is estimated depending on at least one of
- the frequency of missed detections in a track of a detected object over time;
- the distance at which a detected object is detected first;
- the height of a detected object in the image when this object is detected first;
- the track length of a detected object in the image.

2. The driver assisting system as claimed in claim 1, wherein said detection performance is estimated using a result from a classification means (16) in said object processing means (16, 17).

3. The driver assisting system as claimed in claim 2, wherein said detection performance is estimated depending on a classification confidence measure provided by said classification means (16).

4. The driver assisting system as claimed in any one of the preceding claims, wherein said detection performance is estimated using a combination of results for a plurality of detected objects.

5. The driver assisting system as claimed in claim 4, wherein a low confidence indication is made to the driver if the estimated detection performance significantly falls below a predetermined normal detection performance.

6. A driver assisting method for a motor vehicle, comprising the steps of recording infrared and/or visible range images of a region surrounding the motor vehicle, detecting objects in the recorded images by processing said infrared and/or visible range images, applying further processing to objects detected in the recorded images, wherein said further processing comprises object tracking, and controlling a driver assisting means, comprising at least one of a display means, a warning means, a safety system and/or a dynamic vehicle control system, depending on the result of said object detection and object processing, wherein controlling said driver assisting means comprises displaying information relating to an identified object, providing a collision warning to the driver and/or activating or controlling said safety system and/or said dynamic vehicle control system, **characterized by** further providing an estimation of the detection performance of said object detection step using a result from said object processing step, wherein said detection performance is estimated using a result from said object tracking, and wherein said detection performance is estimated depending on at least one of
- the frequency of missed detections in a track of a detected object over time;
- the distance at which a detected object is detected first;
- the height of a detected object in the image when this object is detected first;
- the track length of a detected object in the image.

## Patentansprüche

1. Fahrerassistenzsystem (10) für ein Kraftfahrzeug, umfassend ein Abbildungsmittel (11) im Infrarot- und/oder sichtbaren Bereich, das so ausgelegt ist, dass es Bilder eines Bereichs aufnimmt, der das Kraftfahrzeug umgibt, ein Objekterkennungsmittel (15), das so ausgelegt ist, dass es Objekte in den aufgenommenen Bildern durch Verarbeiten von Bildern von dem Abbildungsmittel (11) im Infrarot- und/oder sichtbaren Bereich erkennt, ein Objektverarbeitungsmittel (16, 17) zum Anwenden einer weiteren Verarbeitung auf Objekte, die in den aufgenommenen Bildern von dem Objekterkennungsmittel (15) erkannt werden, wobei die weitere Verarbeitung eine Objektverfolgung in einem Verfolgungsmittel (17) umfasst, sowie ein Fahrerassistenzmittel (18), das ein Anzeigemittel (19), ein Warnmittel, ein Sicherheitssystem und/oder ein dynamisches Fahrzeugssteuerungssystem umfasst und je nach dem Ergebnis der Objekterkennung und Objektverarbeitung gesteuert wird, wobei die Steuerung des Fahrerassistenzmittels (18) ein Anzeigen von Informationen, die ein ermitteltes Objekt betreffen, Bereitstellen einer Kollisionswarnung für den Fahrer und/oder Aktivieren oder Steuern des Sicherheitssystems und/oder des dynamischen Fahrzeugsteuerungssystems umfasst, **dadurch gekennzeichnet, dass** das Fahrerassistenzsystem (10) ferner ein Mittel (20) zum Einschätzen der Erkennungsleistung umfasst, das so ausgelegt ist, dass es eine Schätzung der Erkennungsleistung des Objekterkennungsmittels (15) unter Verwendung eines Ergebnisses von dem Objektverarbeitungsmittel (16, 17) liefert, wobei die Erkennungsleistung unter Verwendung eines Ergebnisses des Verfolgungsmittels (17) geschätzt wird, wobei ein Hinweis an den Fahrer über das Fahrerassistenzmittel (18) erfolgt und/oder das Fahrerassistenzmittel (18) vorübergehend abgeschaltet wird, wenn die Erkennungsleistung eine vorher festgelegte Bedingung erfüllt, und wobei die Erkennungsleistung in Abhängigkeit von mindestens einem aus Folgendem geschätzt wird:
- die Häufigkeit von nicht erfolgten Erkennungen auf einem Weg eines erkannten Objekts über einen Zeitraum;
- die Entfernung, in der ein erkanntes Objekts zum ersten Mal erkannt wird;
- die Höhe eines erkannten Objekts in dem Bild, wenn dieses Objekt zum ersten Mal erkannt wird;
- die Weglänge eines erkannten Objekts in dem Bild.

2. Fahrerassistenzsystem nach Anspruch 1, wobei die Erkennungsleistung unter Verwendung eines Ergebnisses von einem Klassifizierungsmittel (16) in dem Objektverarbeitungsmittel (16, 17) geschätzt wird.

3. Fahrerassistenzsystem nach Anspruch 2, wobei die Erkennungsleistung in Abhängigkeit von einem Klassifizierungsvertrauensmaß geschätzt wird, das von dem Klassifizierungsmittel (16) bereitgestellt wird.

4. Fahrerassistenzsystem nach einem der vorhergehenden Ansprüche, wobei die Erkennungsleistung unter Verwendung einer Kombination von Ergebnissen für eine Vielzahl von erkannten Objekten geschätzt wird.

5. Fahrerassistenzsystem nach Anspruch 4, wobei ein Hinweis auf ein geringes Vertrauen an den Fahrer erfolgt, wenn die geschätzte Erkennungsleistung beträchtlich unter eine vorher festgelegte normale Erkennungsleistung fällt.

6. Fahrerassistenzverfahren für ein Kraftfahrzeug, umfassend den Schritt des Aufnehmens von Bildern im Infrarot- und/oder sichtbaren Bereich eines Bereichs, der das Kraftfahrzeug umgibt, des Erkennens von Objekten in den aufgenommenen Bildern durch Verarbeiten der Bilder im Infrarot- und/oder sichtbaren Bereich, des Anwendens einer weiteren Verarbeitung auf Objekte, die in den aufgenommenen Bildern erkannt werden, wobei die weitere Verarbeitung eine Objektverfolgung umfasst, sowie des Steuerns eines Fahrerassistenzmittels, das ein Anzeigemittel, ein Warnmittel, ein Sicherheitssystem und/oder ein dynamisches Fahrzeugssteuerungssystem umfasst, je nach dem Ergebnis der Objekterkennung und Objektverarbeitung, wobei die Steuerung des Fahrerassistenzmittels ein Anzeigen von Informationen, die ein ermitteltes Objekt betreffen, Bereitstellen einer Kollisionswarnung für den Fahrer und/oder Aktivieren oder Steuern des Sicherheitssystems und/oder des dynamischen Fahrzeugsteuerungssystems umfasst, **dadurch gekennzeichnet, dass** ferner eine Schätzung der Erkennungsleistung des Objekterkennungsschritts unter Verwendung eines Ergebnisses von dem Objektverarbeitungsschritt bereitgestellt wird, wobei die Erkennungsleistung unter Verwendung eines Ergebnisses der Objektverfolgung geschätzt wird und wobei die Erkennungsleistung in Abhängigkeit von mindestens einem aus Folgendem geschätzt wird:
- die Häufigkeit von nicht erfolgten Erkennungen auf einem Weg eines erkannten Objekts über einen Zeitraum;
- die Entfernung, in der ein erkanntes Objekts zum ersten Mal erkannt wird;
- die Höhe eines erkannten Objekts in dem Bild, wenn dieses Objekt zum ersten Mal erkannt wird;
- die Weglänge eines erkannten Objekts in dem Bild.

## Revendications

1. Système d'assistance au conducteur (10) pour véhicule à moteur, comprenant un moyen d'imagerie (11) du domaine infrarouge et/ou visible adapté pour enregistrer des images d'une zone entourant le véhicule à moteur, un moyen de détection d'objet (15) adapté pour détecter des objets dans les images enregistrées par traitement des images provenant dudit moyen d'imagerie (11) du domaine infrarouge et/ou visible, un moyen de traitement d'objet (16, 17) destiné à appliquer un traitement supplémentaire à des objets détectés dans les images enregistrées par ledit moyen de détection d'objet (15), dans lequel ledit traitement supplémentaire comprend un suivi d'objet dans un moyen de suivi (17), et un moyen d'assistance au conducteur (18), qui comprend un moyen d'affichage (19), un moyen d'avertissement, un système de sécurité et/ou un système dynamique de commande de véhicule et qui est commandé en fonction du résultat de ladite détection d'objet et dudit traitement d'objet, la commande dudit moyen d'assistance au conducteur (18) comprenant l'affichage d'informations relatives à un objet identifié, l'émission d'un avertissement de collision pour le conducteur et/ou l'activation ou la commande dudit système de sécurité et/ou dudit système dynamique de commande de véhicule, **caractérisé en ce que** ledit système d'assistance au conducteur (10) comprend en outre un moyen d'estimation de performance de détection (20) adapté pour fournir une estimation de la performance de détection dudit moyen de détection d'objet (15) au moyen d'un résultat dudit moyen de traitement d'objet (16, 17), ladite performance de détection étant estimée au moyen d'un résultat dudit moyen de suivi (17), une indication étant donnée au conducteur par le biais dudit moyen d'assistance au conducteur (18), et/ou le moyen d'assistance au conducteur (18) étant momentanément arrêté, si la performance de détection remplit une condition prédéfinie, et ladite performance de détection étant estimée en fonction d'au moins un des éléments suivants
- la fréquence de détections manquées dans un chemin d'un objet détecté dans le temps ;
- la distance à laquelle un objet détecté est détecté en premier ;
- la hauteur d'un objet détecté dans l'image quand cet objet est détecté en premier ;
- la longueur du chemin d'un objet détecté dans l'image.

2. Système d'assistance au conducteur selon la revendication 1, dans lequel ladite performance de détection est estimée au moyen d'un résultat d'un moyen de classification (16) dans ledit moyen de traitement d'objet (16, 17).

3. Système d'assistance au conducteur selon la revendication 2, dans lequel ladite performance de détection est estimée en fonction d'une mesure de confiance de classification fournie par ledit moyen de classification (16).

4. Système d'assistance au conducteur selon l'une quelconque des revendications précédentes, dans lequel ladite performance de détection est estimée au moyen d'une combinaison de résultats pour une pluralité d'objets détectés.

5. Système d'assistance au conducteur selon la revendication 4, dans lequel une confiance faible est indiquée au conducteur si la performance de détection estimée chute de manière significative sous une performance de détection normale prédéfinie.

6. Procédé d'assistance au conducteur pour véhicule à moteur, comprenant les étapes consistant à enregistrer des images du domaine infrarouge et/ou visible d'une zone entourant le véhicule à moteur, détecter des objets dans les images enregistrées par traitement desdites images du domaine infrarouge et/ou visible, appliquer un traitement supplémentaire à des objets détectés dans les images enregistrées, ledit traitement supplémentaire comprenant un suivi d'objet, et commander un moyen d'assistance au conducteur, comprenant un moyen d'affichage, un moyen d'avertissement, un système de sécurité et/ou un système dynamique de commande de véhicule, en fonction du résultat de ladite détection d'objet et dudit traitement d'objet, la commande dudit moyen d'assistance au conducteur comprenant l'affichage d'informations relatives à un objet identifié, l'émission d'un avertissement de collision pour le conducteur et/ou l'activation ou la commande dudit système de sécurité et/ou dudit système de commande dynamique du véhicule, **caractérisé en ce que** l'on fournit en outre une estimation de la performance de détection de ladite étape de détection d'objet au moyen d'un résultat de ladite étape de traitement d'objet, ladite performance de détection étant estimée au moyen d'un résultat dudit suivi d'objet, et ladite performance de détection étant estimée en fonction d'au moins l'un des éléments suivants
- la fréquence de détections manquées dans un chemin d'un objet détecté dans le temps ;
- la distance à laquelle un objet détecté est détecté en premier ;
- la hauteur d'un objet détecté dans l'image quand cet objet est détecté en premier ;
- la longueur du chemin d'un objet détecté dans l'image.
